# EUROPÄISCHE PATENTSCHRIFT

(11) **EP 2 765 297 B1**
(45) Veröffentlichungstag und Bekanntmachung des Hinweises auf die Patenterteilung: **20.04.2016**
(21) Anmeldenummer: 14151440.6
(22) Anmeldetag: 16.01.2014
(51) Int. Cl.: F02M 35/02, B01D 46/00, B01D 46/24, F02M 35/024

(54) **Filtersystem**
Filter system
Système de filtre

(30) Priorität: 12.02.2013 DE 102013002275
(43) Veröffentlichungstag der Anmeldung: 13.08.2014
(73) Patentinhaber: MANN + HUMMEL GMBH, 71638 Ludwigsburg (DE)
(72) Erfinder: Kaufmann, Michael, 67149 Meckenheim (DE); Ruhland, Klaus-Dieter, 67149 Meckenheim (DE)

(56) Entgegenhaltungen:
- WO-A1-2004/039476
- WO-A1-2004/043816
- WO-A1-2009/047196
- FR-A1- 2 369 976
- US-A1- 2007 044 441

## Beschreibung

### Technisches Gebiet

Die Erfindung betrifft ein Filtersystem, insbesondere zur Verwendung als Luftfilter einer Brennkraftmaschine, sowie die Verwendung eines Sekundärfilteretements in einem solchen Filtersystem.

### Stand der Technik

Aus der WO 2009/047196 A1 ist ein Filtersystem für Brennkraftmaschinen bekannt, bei dem ein Sekundärelement vorgesehen ist, welches im Inneren eine Filterelements des Filtersystems positioniert ist. Das Sekundärelement hat die Aufgabe, bei einem Austausch des Filterelements den Auslass des Filtersystems weiterhin verschlossen zu halten, so dass kein Schmutz in diesen Bereich eindringen kann, während das Fitterelement gereinigt oder erneuert wird. Im Betrieb des Filtersystems strömt die gereinigte Luft durch das Sekundärelement hindurch, welches eine Vliesauflage auf einer tragenden Struktur aufweist. Das Sekundärelement ist über ein Schraubgewinde an dem Auslassstutzen des Auslasses befestigt und gleichzeitig über einen O-Ring in diesem Bereich abgedichtet.

Ferner aus der WO 2004/039476 A1 ein Luftfilter mit einem austauschbaren Filterelement bekannt, welches einen äußeren Rahmen mit einem Drehbefestigungsmechanismus umfasst.

Die WO 2004/043818 A2 zeigt einen kindersicheren Behälter mit einem durch Bewegung in einer Vorzugsrichtung öffenbaren Deckel. Ebenfalls einen Behälter zeigt die FR 2369976 A1, wobei der Behälter einen sicheren, zweiteiligen Verschluss aufweist.

Grundsätzlich ist vorgesehen die Filterelemente von Luftfiltern nach einer bestimmten Betriebszeit auszutauschen. Je nach Staubanfall kann die Standzeit eines Luftfilters wenige Tage (Baumaschinen) bis zu mehreren Monaten betragen. Dabei verbleibt üblicherweise das Sekundärelement, das auf der Reinluftseite angeordnet ist, im Filtersystem. Ist jedoch auch das Sekundärelement stark mit Schmutz beladen, so muss es ebenfalls getauscht werden, da sonst der Luftdurchsatz zu sehr verringert wird. Dabei ist die zuverlässige und prozesssichere Abdichtung von Filterelement und Sekundärelement in einem Gehäuse besonders wichtig, um den Ansaugtrakt einer darauf folgenden Brennkraftmaschine vor eindringendem Schmutz zu schützen.

Eine Aufgabe der Erfindung ist es deshalb, ein Filtersystem zu schaffen, bei dem ein servicefreundliches Anbringen und Lösen eines Sekundärelements aus seiner Befestigung im Gehäuse ermöglicht ist.

Eine weitere Aufgabe der Erfindung ist es, ein Filterelement und ein Sekundärelement zum Einbau in ein solches Filtersystem zu schaffen.

Die vorgenannten Aufgaben werden nach einem Aspekt der Erfindung gelöst bei einem Filtersystem, das ein Gehäuse mit wenigstens einem lösbaren Deckel, der das Gehäuse verschließt, sowie wenigstens ein auswechselbares Element mit einer Mitnahmekontur, das innerhalb des Gehäuses angeordnet ist, umfasst, wobei der Deckel ein Mitnahmewerkzeug aufweist, welches mit der Mitnahmekontur des auswechselbaren Elements korrespondiert.

Günstige Ausgestaltungen und Vorteile der Erfindung ergeben sich aus den weiteren Ansprüchen, der Beschreibung und der Zeichnung.

### Offenbarung der Erfindung

Es wird ein Filtersystem vorgeschlagen, das ein Gehäuse mit wenigstens einem lösbaren Deckel, der das Gehäuse verschließt, sowie wenigstens ein auswechselbares Element mit einer Mitnahmekontur, das innerhalb des Gehäuses angeordnet ist, umfasst.

Dabei weist der Deckel ein Mitnahmewerkzeug auf, welches mit der Mitnahmekontur des auswechselbaren Elements derart korrespondiert, dass der vom Filtergehäuse gelöste und umgedrehte Deckel, mit dem Mitnahmewerkzeug auf das zu lösende Element aufsetzbar und das zu lösende Element über eine Rotationsbewegung des Deckels losdrehbar ist.

Der servicebedingte Austausch von geschraubten Elementen eines Filtersystems wie Filterelemente und Sekundärelemente erfolgt üblicherweise durch Lösen und Festdrehen von Hand. Gerade bei großen Elementen wird es jedoch immer schwieriger, das erforderliche Anzugsmoment aufzubringen. Deshalb werden vermehrt separate Werkzeuge eingesetzt, um die Elemente zu lösen und wieder festzuziehen, da durch eine größere Hebelwirkung größere Momente aufgebracht werden können. Dieses Werkzeug kann nun im Deckel des Filtersystems integriert sein, so dass es jederzeit im Servicefall vor Ort verfügbar ist und nicht abhandenkommen kann. Beispielsweise kann der Deckel über eine Mitnahmekontur verfügen, die in ihrer Negativform in dem auszuwechselnden Element ebenfalls vorgesehen ist, so dass es genügt, den Deckel von dem Filtergehäuse zu lösen, beispielsweise umzudrehen, mit dem Mitnahmewerkzeug auf das zu lösende Element aufzusetzen und dieses über eine Rotationsbewegung des Deckels loszudrehen. In diesem Fall stellt der Deckel das Werkzeug dar, bzw. dient zur Handhabung des Werkzeugs beim Einsatz des Werkzeugs.

Vorteilhaft kann die Abdichtung von Filterelement und Sekundärelement in einem Gehäuse temperaturbeständig und rütteltest ausgeführt sein. Auch an Anlagen oder Einrichtungen, die starken Schwingungen oder Erschütterungen ausgesetzt sind, kann die Abdichtung von Filterelement und Sekundärelement gewährleistet sein, da das Sekundärelement besonders sicher und fest mit dem Gehäuse verbunden werden kann. Um ein unabsichtliches Lösen im Betrieb zu vermeiden, können bei Schraubverbindungen ausreichende Anzugsmomente eingehalten werden, so dass auch entsprechende Lösemomente bei einem Austausch aufgebracht werden können. Auch wenn höhere Momente erforderlich sein sollten, kann das Anbringen und Lösen des Sekundärelements über seine Verschraubung ohne zusätzlich mitzuführende Werkzeuge erfolgen.

Die Mitnahmekontur, die komplementär am Sekundärelement und am Deckel ausgebildet ist, kann z.B. ein Mehreck sein, eine Rändelstruktur, eine Rechteck und dergleichen. Ist die Mitnahmekontur im Zentrum des Deckels ausgebildet, kann ein relativ großer Durchmesser des Deckels eine vorteilhafte Hebelwirkung erlauben.

Der Deckel kann das Gehäuse z.B. stirnseitig abdecken und die Öffnung abdecken, durch welche das Filterelement ein- und ausgebaut wird. Denkbar sind jedoch auch andere Gehäuseteile, welche lösbar ausgebildet sind und zur temporären Demontage geeignet sind.

In einer Ausführungsform kann das Mitnahmewerkzeug als Vertiefung im Deckel ausgeführt sein, wenn beispielsweise die Mitnahmekontur in dem Element als korrespondierende Erhebung ausgeführt ist. Damit passen beide Teile aufeinander und das Element kann über eine Drehung des Deckels gelöst werden.

Umgekehrt kann in einer anderen Ausführungsform das Mitnahmewerkzeug als Erhebung im Deckel ausgeführt sein, wenn beispielsweise die Mitnahmekontur in dem Element als korrespondierende Vertiefung ausgeführt ist. Auch damit passen beide Teile aufeinander, wodurch die Werkzeugfunktionalität erfüllt ist.

Bevorzugt ist die Mitnahmekontur auf der Außenseite des Deckels angeordnet, besonders bevorzugt zentral auf der Deckelaußenseite. Dies hat beispielsweise auch den Vorteil, dass die Mitnahmekontur nicht im Innenraum des Gehäuses liegt und dort Strömungsraum oder Bauraum belegt.

In einer günstigen Ausführungsform kann ein Filtersystem, ein Gehäuse mit einer Längsachse (L), einen Deckel, der das Gehäuse an einer Stirnseite verschließt, einen am Gehäuse angeordneten Einlass zum Zuführen eines zu filternden Mediums, insbesondere Luft, und einen am Gehäuse angeordneten Auslass zur Ableitung des gefilterten Mediums, ein Filterelement, welches im Gehäuse angeordnet ist, ein auswechselbares Sekundärelement, welches im Inneren des Filterelements angeordnet ist und eine Mitnahmekontur aufweist, umfassen, wobei der Deckel ein Mitnahmewerkzeug aufweist, welches mit der Mitnahmekontur des Sekundärelements korrespondiert. Das Gehäuse kann beispielsweise aus einer Gehäusewand und zwei einander gegenüberliegenden Stirnseiten bestehen. Eine Stirnseite kann dabei fest mit der Gehäusewand verbunden sein und eine Stirnseite kann durch einen abnehmbaren Deckel ausgebildet sein. Sowohl das Filterelement als auch das sich im Inneren des Fifterelements befindliche Sekundärelement können günstigerweise konzentrisch um die Längsachse des Gehäuses angeordnet sein. Am Gehäuse kann konzentrisch um die Längsachse weiter ein Auslass zur Ableitung des gefilterten Mediums vorgesehen sein. Das Filterelement und das Sekundärelement sind üblicherweise auswechselbar in dem Gehäuse des Filtersystems angeordnet und nach öffnen des Gehäuses über den beispielsweise verschraubten Deckel zugänglich. Durch eine solche Anordnung lässt sich der Deckel vom Gehäuse lösen und als Werkzeug zum Lösen und Festdrehen des Sekundärelements verwenden und stellt gleichzeitig ein Werkzeug dar, das jederzeit im Servicefall vor Ort verfügbar ist und nicht verloren gehen kann.

Vorteilhafterweise kann dabei das Sekundärelement über eine Schraubverbindung mit dem Gehäuse verbunden sein, so dass ein Drehen des an dem Sekundärelements angesetzten Deckels genügt, um das Sekundärelement loszudrehen.

Alternativ kann das Sekundärelement jedoch auch über einen Dreh/Rastverschluss mit dem Gehäuse verbunden sein. Auch auf diese Weise ist über ein Ansetzen und Drehen des Deckels an dem Sekundärelement dieses aus seiner Verrastung zu lösen.

Zweckmäßigerweise kann das Sekundärelement, das mit dem Gehäuse verbunden ist, beim Wechsel des Filterelements im Gehäuse verbleiben. Auf diese Weise ist gewährleistet, dass der sich an den Auslass des Filtergehäuses anschließende weitere Luftführungstrakt vor Verschmutzung beim Austauschprozess geschützt ist.

Vorteilhafterweise kann im Bereich des Einlasses des Filtersystems ein Zyklonabscheider vorgesehen sein und am Gehäuse oder am Deckel ein Schmutzauslass vorgesehen sein. Dieser Zyklonabscheider besteht aus einer Leitgeometrie, die das zu filternde Medium in eine Rotation versetzt. Durch diese Rotation wird der Schmutz im Bereich der Gehäusewand aufkonzentriert und an einer geeigneten Stelle über einen Schmutzauslass ausgetragen. Durch die Vorabscheidung des größten Teils an Schmutz aus der zu filternden Luft kann die Standzeit des eigentlichen Filterelements entscheidend verlängert werden.

In einer weiteren vorteilhaften Ausgestaltung kann ein am Deckel angebrachter Einlass und/oder Schmutzauslass als Griffhebel ausgebildet sein. Auf diese Weise ist es möglich, durch die Hebelwirkung beim Drehen des Deckels ein größeres Moment auf die zu lösenden Elemente aufzubringen, was gerade bei sehr großen Filtersystemen oder bei stark verschmutzten Filtersystemen, wo die Verschraubungen eventuell festsitzen, von Bedeutung sein kann.

Zweckmäßigerweise kann das Filtersystem als Luftfilter, insbesondere als Luftfilter einer Brennkraftmaschine verwendet werden. Der sichere Betrieb von Brennkraftmaschinen beruht auch auf einer sicheren und günstigen Filterung der Ansaugluft für den Verbrennungsbetrieb. Das beschriebene Filterelements stellt dafür eine wirtschaftliche Möglichkeit dar.

Vorteilhaft ist ebenso die Verwendung des Filtersystem als Partikelfilter, insbesondere als Öl- oder Kraftstofffilter einer Brennkraftmaschine. Auch hier sind die sichere Montage und wirtschaftliche Austauschbarkeit des beschriebenen Filterelement von entscheidender Bedeutung.

Die Erfindung betrifft nach einem weiteren Aspekt ein Filterelement zum Einbau in ein Filtersystem wie oben beschrieben, wobei das Filterelement auswechselbar in dem Gehäuse des Filtersystems angeordnet ist. Vorteilhafterweise kann im Servicefall beim Austausch des Filterelements ein im Deckel eines Gehäuses des Filtersystems integriertes Werkzeug zum Lösen und Festziehen des Filterelements benutzt werden. Das Werkzeug ist auf diese Weise im Servicefall immer vor Ort und kann nicht abhandenkommen.

Weiter betrifft die Erfindung ein Sekundärelement zum Einbau in ein Filtersystem wie oben beschrieben, wobei das Sekundärelement auswechselbar in dem Gehäuse des Filtersystems angeordnet ist. Vorteilhafterweise kann im Servicefall beim Austausch des Sekundärelements ein im Deckel eines Gehäuses des Filtersystems integriertes Werkzeug zum Lösen und Festziehen des Sekundärelements benutzt werden. Das Werkzeug ist auf diese Weise im Servicefall immer vor Ort und kann nicht abhandenkommen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

**Es zeigen beispielhaft:**
- Fig. 1: eine perspektivische Ansicht eines Filtersystems nach einem Ausführungsbeispiel der Erfindung mit tangentialem Einlass, zentrischem Auslass und bodenseitigem Schmutzauslass;
- Fig. 2: eine perspektivische Ansicht eines Filtersystems nach einem Ausführungsbeispiel der Erfindung mit radialem Einlass und zentrischem Auslass;
- Fig. 3: eine perspektivische Ansicht eines Filtersystems nach Figur 1, dargestellt von der Deckelseite mit sichtbarer Mitnahmekontur;
- Fig. 4: Längsschnitt durch ein Filtersystem nach Figur 1;
- Fig. 5: eine perspektivische Ansicht eines Filtersystems nach Figur 1 mit abgenommenem Deckel und sichtbarer Mitnahmekontur eines Sekundärelements;
- Fig. 6: eine perspektivische Ansicht eines Filtersystems nach Figur 1 mit abgenommenem und umgedrehtem Deckel vor dem Inkontaktbringen der Mitnahmekonturen von Deckel und Sekundärelement;
- Fig. 7: eine perspektivische Ansicht eines Filtersystems nach Figur 1 mit als Werkzeug auf das Sekundärelement aufgesetztem Deckel.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

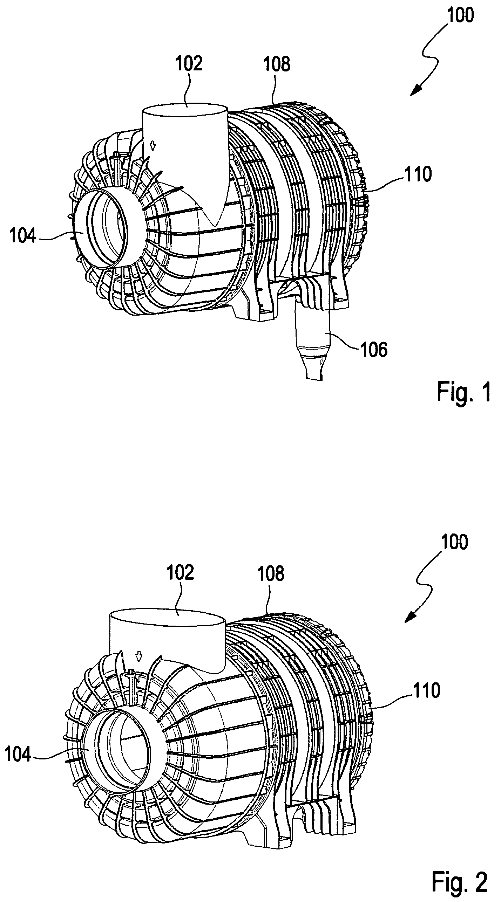

Figur 1 zeigt eine perspektivische Ansicht eines Filtersystems 100 nach einem Ausführungsbeispiel der Erfindung mit tangentialem Einlass 102, zentrischem Auslass 104 und bodenseitigem Schmutzauslass 106. Dargestellt ist eine Rundfilterbauform, die aus einem Gehäuse 108 besteht, das mit einem Deckel 110 verschlossen ist. Im Fall eines Luftfiltersystems strömt staubbeladene Luft in den Einlass 102, der tangential zum innen eingebauten Luftfilterelement angeordnet ist, so dass die Luft im Innern des Gehäuses 108 durch einen Anströmschutz am Filterelement in eine Rotationsbewegung versetzt wird. Filterelement und Anströmschutz sind in der Zeichnung nicht dargestellt. Durch den über die Rotationsbewegung der Luft bewirkten Zykloneffekt wirken Fliehkräfte auf die Staubpartikel der strömenden Luft, so dass diese sich teilweise an der Gehäusewand abscheiden und über den Schmutzauslass 106 aus dem Filtersystem 100 abströmen können. Dadurch wird das Filterelement weniger belastet. Die gereinigte Luft kann über den zentrischen Auslass 104 aus dem Gehäuse 108 abgeführt werden.

Figur 2 zeigt eine perspektivische Ansicht eines Filtersystems 100 nach einem Ausführungsbeispiel mit radialem Einlass 102 und zentrischem Auslass 104. Dargestellt ist ebenfalls eine Rundfilterbauform, die aus einem Gehäuse 108 besteht, das mit einem Deckel 110 verschlossen ist. Der Einlass, über den staubbeladene Luft in das Gehäuse gelangen kann, ist in dem Fall zentral über dem innen angebrachten Filterelement angeordnet. Der Auslass 104, über den die gereinigte Luft abströmen kann, ist ebenfalls wie in Figur 1 zentrisch angeordnet.

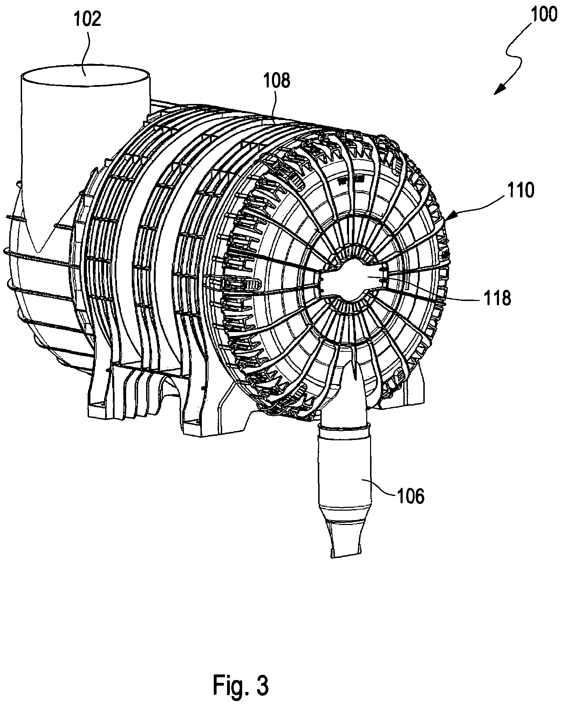

Figur 3 zeigt eine perspektivische Ansicht eines Filtersystems 100 nach Figur 1, dargestellt von der Deckelseite mit sichtbarer Mitnahmekontur. Hierbei ist zu sehen, dass in dem Deckel 110 eine Mitnahmekontur 118 in Form einer Vertiefung angebracht ist, die nach Abnehmen des Deckels 110 vom Gehäuse 108 als Werkzeug zum Lösen eines Sekundärelements verwendet werden kann.

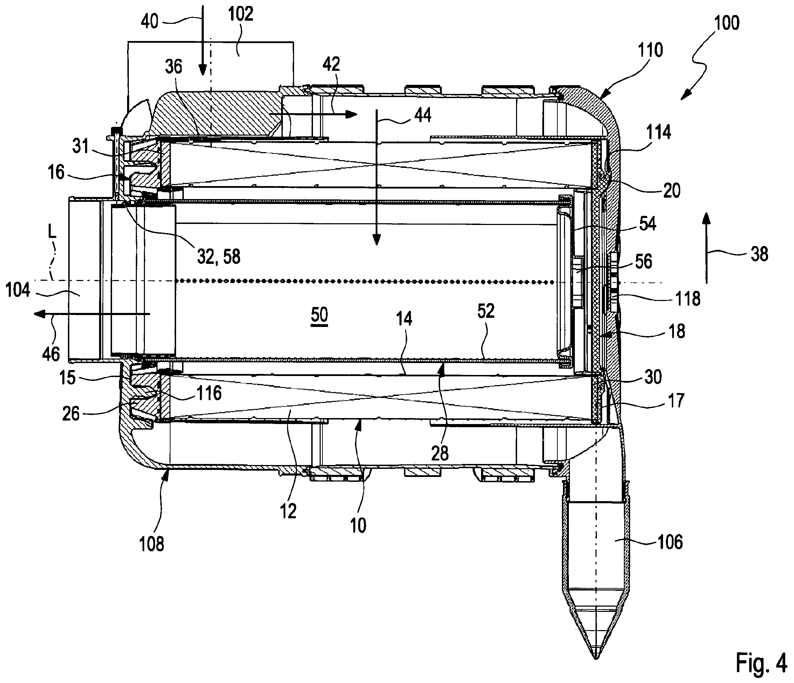

In Figur 4 ist ein Querschnitt durch ein Filtersystem 100 nach einem Ausführungsbeispiel mit tangentialem Einlass 102, zentrischem Auslass 104 und bodenseitigem Schmutzauslass 106 dargestellt. Das Gehäuse 108 des Filtersystems 100 ist mit einem Deckel 110 verschlossen. Ein Filterelement 10, das aus konzentrisch angeordnetem Stützrohr 14 und Filtermedium 12 besteht, ist an zwei gegenüberliegenden Stirnseiten mit einer ersten und einer zweiten Endscheibe 16, 18 abgeschlossen. Die zweite Endscheibe 18 weist Abstütznoppen 20 auf, welche axial nach außen erstreckend kreisförmig angeordnet sind und bei einem Einbau in das aufnehmende Gehäuse 108 an einer inneren Deckelkontur 114 des Deckels 110 anliegend sich in axialer Richtung nach außen umlegen und dadurch an dem Gehäuse 108 axial und radial abstützen. Am der gegenüberliegenden Stirnseite des Filterelements 10 ist an der ersten Endscheibe 16 eine Radialdichtung 26 angebracht, mit Hilfe deren das Filterelement 10 sich an dem Gehäuse 108 radial abstützt und den ungefilterten gegen den gefilterten Luftraum abdichtet. Das Filterelement 10 ist damit sowohl axial als auch doppelt radial gegen das Gehäuse 108 verspannt. Staubbeladene Luft kann durch den Einlass 102 einströmen, der in diesem Fall als tangentialer Einlass dargestellt ist und durch die damit bewirkte Rotationsbewegung der Luft einen Zyklonbetrieb ermöglicht. Staubpartikel können durch die Rotationsbewegung teilweise vorabgeschieden sich an der Gehäusewand ablagern und durch den Schmutzauslass 106 bei Einbau des Filtergehäuses 108 mit Schmutzauslass 106 nach unten durch die Schwerkraft aus dem Filtersystem 100 entleert werden. Die Luft strömt beim Betrieb nach Teilabscheidung der Staubpartikel durch das Filtermedium 12 ins Innere des Filterelements. Staubpartikel bleiben dabei je nach Filtermedium ab einer bestimmten Größe im Filtermedium hängen. Je nach Staubeintrag muss deshalb das Filterelement nach einer gewissen Standzeit ausgetauscht werden. Am auslassseitigen Ende des Filterelements 10 ist zwischen Stützrohr 14 und Auslass 104 ein Sekundärelement 28 angebracht, das aus einem relativ durchlässigen Filtermedium besteht und beim Austausch des Filterelements 10 im Gehäuse 108 zum Schutz der weiteren Luftführung einer Brennkraftmaschine gegen eindringende Staubpartikel und andere Gegenstände verbleibt. Das Sekundärelement 28 weist an seinem geschlossenen Ende des Körpers 52 eine Stirnseite 54 auf, in der als Erhebung eine Mitnahmekontur 56 angebracht ist, welche zum Lösen der Verschraubung 32 am Gehäuse 108 verwendet werden kann. Im Deckel 110 des Gehäuses 108 ist als Vertiefung eine Mitnahmekontur 118 dargestellt. Diese Mitnahmekontur 118 kann nach Lösen des Deckels 110 vom Gehäuse 108 und umgekehrtem Aufsetzen der Mitnahmekontur 118 auf die Mitnahmekontur 56 des Sekundärelements 28 als Mitnahmewerkzeug verwendet werden. Dadurch ist es möglich, ein größeres Moment beim Lösen der Verschraubung 32 aufzubringen. Der Einsatz als Mitnahmewerkzeug ist auch möglich für den Fall, dass für die Verbindung von Sekundärelement 28 zum Gehäuse 108 eine Dreh/Rastverbindung 58 verwendet wird.

Alternativ kann die Mitnahmekontur 56 in dem Sekundärelement 28 auch als Vertiefung der Stirnseite 54 ausgeführt sein, wenn die Mitnahmekontur 118 des Deckels 110 als Erhebung ausgeführt wird.

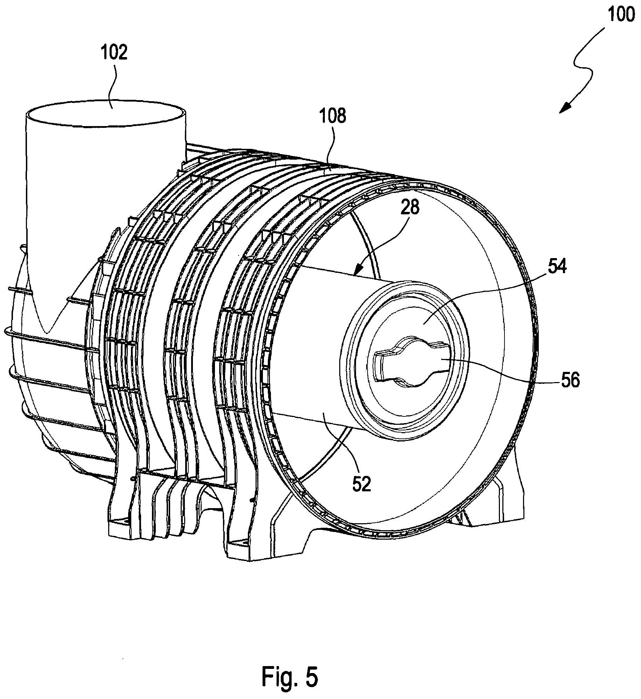

Figur 5 zeigt eine perspektivische Ansicht eines Filtersystems 100 nach Figur 1 mit abgenommenem Deckel und sichtbarer Mitnahmekontur eines Sekundärelements. Hierbei ist das im Gehäuse 108 des Filtersystems 100 eingeschraubte Sekundärelement 28 mit Körper 52, Stirnseite 54 und Mitnahmekontur 56, die in diesem Fall als Erhebung ausgeführt ist, zu erkennen.

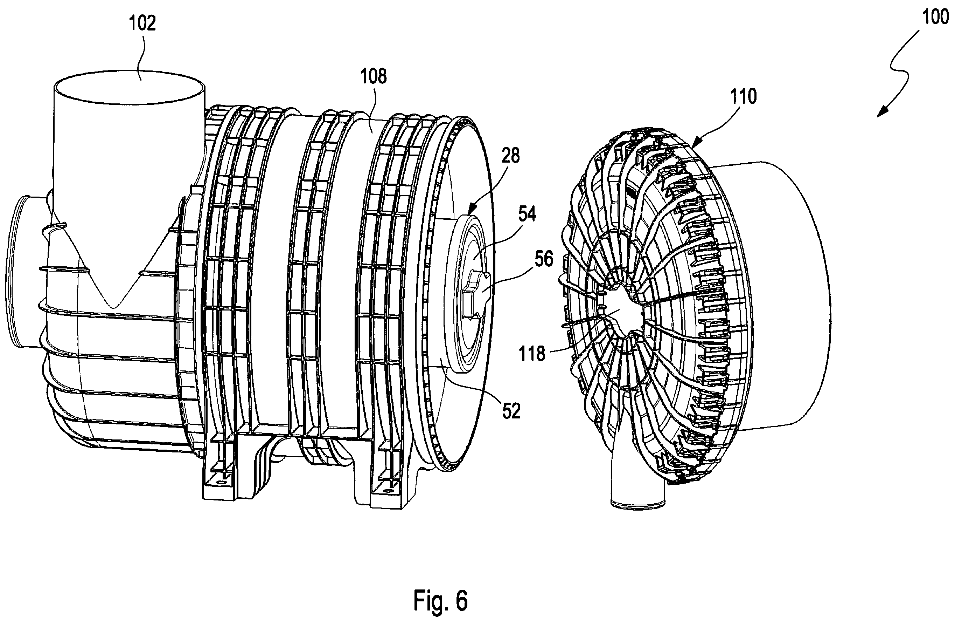

In Figur 6 ist eine perspektivische Ansicht eines Filtersystems 100 nach Figur 1 mit abgenommenem und umgedrehtem Deckel 110 vor dem Inkontaktbringen der Mitnahmekonturen von Deckel und Sekundärelement dargestellt. Dies verdeutlicht die Verwendung des Deckels 110 mit der Mitnahmekontur 118, die in diesem Fall als Vertiefung ausgeführt ist und in ihrer Negativform der Mitnahmekontur 56 des Sekundärelements 28 in der Stirnseite 54 des Körpers 52 entspricht, als Mitnahmewerkzeug.

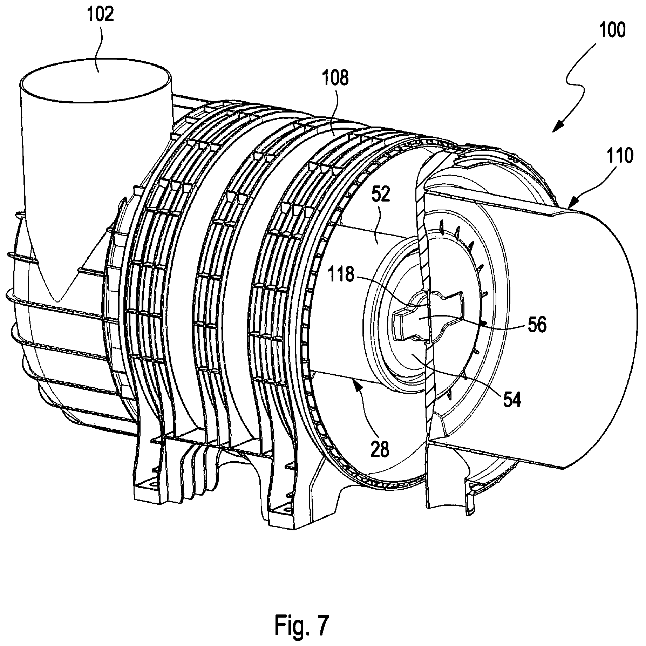

Figur 7 zeigt daraufhin in der Weiterführung der Verwendung des Deckels 110 als Mitnahmewerkzeug eine perspektivische Ansicht eines Filtersystems 100 nach Figur 1 mit als Werkzeug auf das Sekundärelement aufgesetztem Deckel 110. Der Deckel 110 ist mit seiner Mitnahmekontur 118 direkt auf die Mitnahmekontur 56 des Sekundärelements 28 in der Stirnseite 54 des Körpers 52 aufgesetzt. Zum Lösen der Schraubverbindung des Sekundärelements 28 vom Gehäuse 108 kann der Deckel 110 gedreht werden, der damit das Sekundärelement 28 bei der Drehung mitnimmt. Auf diese Weise ist es möglich, über die Hebelwirkung des Deckels 110 ein größeres Moment auf die Verschraubung auszuüben und damit die Verbindung leichter zu lösen.

Vorteilhafterweise kann ein am Deckel 110 angebrachter Einlass und/oder Schmutzauslass als Griffhebel ausgebildet sein, so dass darüber beim Drehen des Deckels 110 ein noch größeres Moment auf die Verschraubung des Sekundärelements 28 ausgeübt werden kann. Ein solcher Schmutzauslass 106 ist beispielsweise in den Figuren 1 und 3 dargestellt. Damit ist ein noch leichteres Lösen der Verbindung Sekundärelement 28 vom Gehäuse 108 möglich.

## Patentansprüche

1. Filtersystem (100), umfassend
- ein Gehäuse (108),
- wenigstens einen lösbaren Deckel (110), der das Gehäuse (108) verschließt,
- wenigstens ein losdrehbares, auswechselbares Element (28) mit einer Mitnahmekontur (56), das innerhalb des Gehäuses (108) angeordnet ist,
wobei der Deckel (110) auf seiner Außenseite ein Mitnahmewerkzeug (118) aufweist, welches mit der Mitnahmekontur (56) des auswechselbaren Elements (28) derart korrespondiert, dass der vom Filtergehäuse gelöste und umgedrehte Deckel (110), mit dem Mitnahmewerkzeug (118) auf das zu lösende Element (28) aufsetzbar und das zu lösende Element über eine Rotationsbewegung des Deckels losdrehbar ist.

2. Filtersystem (100) nach Anspruch 1, wobei das Mitnahmewerkzeug (118) als Kontur im Deckel (110) ausgebildet ist.

3. Filtersystem (100) nach Anspruch 1 oder 2, wobei das Mitnahmewerkzeug (118) als Vertiefung oder Erhebung im Deckel (110) ausgebildet ist.

4. Filtersystem (100) nach einem der vorhergehenden Ansprüche, insbesondere für Luft, beispielsweise für die Ansaugluft von Brennkraftmaschinen, wobei
- das Gehäuse (108) eine Längsachse (L) aufweist,
- der Deckel (110) das Gehäuse (108) an einer Stirnseite verschließt,
- das Filtersystem (100) weiter umfasst einen am Gehäuse (108) angeordneten Einlass (102) zum Zuführen eines zu filternden Mediums und einen am Gehäuse (108) angeordneten Auslass (104) zur Ableitung des gefilterten Mediums, sowie
- ein Filterelement (10), welches im Gehäuse (108) angeordnet ist, und wobei das auswechselbare Element ein Sekundärelement (28) ist, welches im Inneren (50) des Filterelements (10) angeordnet ist.

5. Filtersystem (100) nach Anspruch 4, wobei das Sekundärelement (28) über eine Schraubverbindung (32) mit dem Gehäuse (108) verbunden ist.

6. Filtersystem (100) nach Anspruch 4, wobei das Sekundärelement (28) über einen Dreh/Rastverschluss (58) mit dem Gehäuse (108) verbunden ist.

7. Filtersystem (100) nach einem der Ansprüche 4-6, wobei das Sekundärelement (28), mit dem Gehäuse (108) verbunden, beim Wechsel des Filterelements (10) im Gehäuse (108) verbleibt.

8. Filtersystem (100) nach einem der vorhergehenden Ansprüche, wobei im Bereich des Einlasses (102) ein Zyklonabscheider (36) vorgesehen ist und am Gehäuse (108) oder am Deckel (110) ein Schmutzauslass (106) vorgesehen ist.

9. Filtersystem (100) nach einem der vorhergehenden Ansprüche, wobei ein am Deckel (110) angebrachter Einlass (102) und/oder Schmutzauslass (106) als Griffhebel ausgebildet ist.

10. Verwendung eines Sekundärelements (28) zum Einbau in ein Filtersystem (100) nach einem der vorhergehenden Ansprüche, wobei das Sekundärelement (28) innerhalb des Gehäuses (108) des Filtersystems (100) losdreh- und auswechselbar anordenbar ist und eine Mitnahmekontur (56) aufweist, die mit dem Mitnahmewerkzeug (118) auf der Außenseite des Deckels (110) derart korrespondiert, dass der vom Filtergehäuse gelöste und umgedrehte Deckel (110) mit dem Mitnahmewerkzeug (118) auf die Mitnahmekontur (56) des zu lösenden Sekundärelements (28) aufsetzbar und das zu lösende Sekundärelement über eine Rotationsbewegung des Deckels (110) losdrehbar ist.

## Claims

1. Filter system (100), comprising
- a housing (108),
- at least one detachable cover (110) which closes the housing (108),
- at least one exchangeable element (28) detachable by turning with a synchronization contour (56) disposed inside of the housing (108),
wherein the cover (110) features on its exterior side a synchronization tool (118) which corresponds with the synchronization contour (56) of the exchangeable element (28) in such a way that the cover (110) detached from the filter housing and reversed can be attached by means of the synchronization tool (118) to the element (28) to be detached and that the element to be detached can be detached by turning via a rotational movement of the cover.

2. Filter system (100) according to claim 1, wherein the synchronization tool (118) is designed as contour in the cover (110).

3. Filter system (100) according to claim 1 or 2, wherein the synchronization tool (118) is designed as recess or projection in the cover (110).

4. Filter system (100) according to one of the above claims, in particular for air, for example for the intake air of internal combustion engines, wherein
- the housing (108) features a longitudinal axis (L),
- the cover (110) closes the housing (108) on a front side,
- the filter system (100) comprises furthermore an inlet (102) disposed at the housing (108) for supplying a medium to be filtered and an outlet (104) disposed at the housing (108) for discharging the filtered medium, as well as
- a filter element (10) which is disposed in the housing (108) and wherein the exchangeable element is a secondary element (28) which is disposed in the inside (50) of the filter element (10).

5. Filter system (100) according to claim 4, wherein the secondary element (28) is connected with the housing (108) via a screwed connection (32).

6. Filter system (100) according to claim 4, wherein the secondary element (28) is connected with the housing (108) via a rotary/snap-in lock (58).

7. Filter system (100) according to one of the claims 4-6, wherein the secondary element (28), connected with the housing (108), remains in the housing (108) when the filter element is changed.

8. Filter system (100) according to one of the above claims, wherein in the area of the inlet (102) a cyclone separator (36) is provided and that a dirt outlet (106) is provided on the housing (108) or on the cover (110).

9. Filter system (100) according to one of the above claims, wherein an inlet (102) and/or dirt outlet (106) designed as gripping lever are realized on the cover (110).

10. Utilization of a secondary element (28) for mounting into a filter system (100) according to one of the above claims, wherein the secondary element (28) can be detached by turning and disposed exchangeably in the housing (108) of the filter system (100) and features a synchronization contour (56) that corresponds with the synchronization tool (118) on the exterior side of the cover (110) in such a way that the cover (110) detached from the filter housing and reversed is attachable to the synchronization contour (56) of the secondary element (28) to be detached by means of the synchronization tool (118) and that the secondary element to be detached can be detached by turning via a rotational movement of the cover (110).

## Revendications

1. Système de filtre (100), comprenant
- un boîtier (108),
- au moins un couvercle (110) amovible qui obture le boîtier (108),
- au moins un élément (28) échangeable et détachable par rotation avec un contour entraîneur (56) disposé à l'intérieur du boîtier (108),
le couvercle (110) présentant sur sa face extérieure un outil entraîneur (118) qui correspond avec le contour entraîneur (56) de l'élément (28) échangeable de telle manière que le couvercle (110) détaché du boîtier de filtre et renversé peut, avec l'outil entraîneur (118), être placé sur l'élément (28) à détacher et que l'élément à détacher peut être détaché par un mouvement de rotation du couvercle.

2. Système de filtre (100) selon la revendication 1, l'outil entraîneur (118) étant exécuté en tant que contour dans le couvercle (110).

3. Système de filtre (100) selon la revendication 1 ou 2, l'outil entraîneur (118) étant exécuté en tant que creux ou de saillie dans le couvercle (110).

4. Système de filtre (100) selon l'une des revendications précédentes, notamment pour de l'air, par exemple pour l'air d'aspiration de moteurs à combustion interne,
- le boîtier (108) présentant un axe longitudinal (L),
- le couvercle (110) obturant le boîtier (108) sur une face frontale,
- le système de filtre (100) comprenant par ailleurs une entrée (102) située sur le boîtier (108) permettant d'introduire un milieu à filtrer, ainsi qu'une sortie (104) située sur le boîtier (108) permettant d'évacuer le milieu à filtrer, de même qu'
- un élément filtrant (10) disposé dans le boîtier (108), l'élément échangeable étant un élément secondaire (28) qui est placé à l'intérieur (50) de l'élément filtrant (10).

5. Système de filtre (100) selon la revendication 4, l'élément secondaire (28) étant relié au boîtier (108) par un raccord vissé (32).

6. Système de filtre (100) selon la revendication 4, l'élément secondaire (28) étant relié au boîtier (108) par une fermeture à encliquetage/à vis (58).

7. Système de filtre (100) selon l'une des revendications 4 à 6, l'élément secondaire (28), une fois relié au boîtier (108), restant dans le boîtier (108) lors de l'échange de l'élément filtrant.

8. Système de filtre (100) selon l'une des revendications précédentes, un séparateur à cyclone (36) étant prévu dans la zone de l'entrée (102) et un orifice d'évacuation des saletés (106) étant prévu sur le boîtier (108) ou sur le couvercle (110).

9. Système de filtre (100) selon l'une des revendications précédentes, une entrée (102) et/ou une sortie d'évacuation des saletés (106) exécutée en tant que levier manuel étant disposées sur le couvercle (110).

10. Utilisation d'un élément secondaire (28) à monter dans un système de filtre (100) selon l'une des revendications précédentes, l'élément secondaire (28) pouvant être disposé à l'intérieur du boîtier (108) du système de filtre (100) de façon détachable par rotation et échangeable et présentant un contour entraîneur (56) qui correspond avec l'outil entraîneur (118) sur la face extérieure du couvercle (110) de telle manière que le couvercle (110) détaché du boîtier de filtre et renversé peut, avec l'outil entraîneur (118), être placé sur le contour entraîneur (56) de l'élément secondaire (28) à détacher et que l'élément secondaire à détacher peut être détaché par un mouvement de rotation du couvercle (110).
